# EUROPEAN PATENT SPECIFICATION

(11) **EP 1 526 010 B1**
(45) Date of publication and mention of the grant of the patent: **29.06.2011**
(21) Application number: 04077914.2
(22) Date of filing: 22.10.2004
(51) Int. Cl.: B60D 1/52

(54) **Coupling assembly for vehicles**
Kupplungseinheit für Kraftfahrzeuge
Ensemble d'attelage pour véhicules

(30) Priority: 24.10.2003 NL 1024607
(43) Date of publication of application: 27.04.2005
(73) Proprietor: Thule Towing Systems B.V., 7950 AA Staphorst (NL)
(72) Inventor: Eising, Frederik Jacob, 9415 PN Hijken (NL)
(74) Representative: Ferguson, Alexander

(56) References cited:
- EP-A- 0 934 838
- DE-U- 8 813 812
- DE-U- 9 105 268

## Description

The invention relates to a coupling assembly for vehicles, such as for a tow hitch facility.

Coupling assemblies for vehicles have been generally known and for quite some time already. Usually the coupling assemblies are adjusted to use for towing car trailers, by means of a tow hitch. Such assemblies used to be permanent, but later on two-part tow hitch assemblies were brought onto the market consisting of an accommodation part that was permanently attached to the vehicle and a detachable tow hitch member, that could be coupled into the accommodation part for use, and after use could be uncoupled in order to be stowed away. In that way the tow hitch, when inoperative, does not form an obstacle to persons passing the vehicle at the rear. Moreover it is not allowed that the hitch ball fully or partially covers the license plate.

An example of such a tow hitch assembly is described in European patent application 0.950.549 the contents of which should be deemed included here.

DE 88.13.812 discloses two-part tow hitch assemblies according to the preamble of claim 1, having an accommodation part to be permanently attached to the vehicle. The accommodation part comprises semi circular edges to receive bearing pins of the detachable tow hitch member. DE 91.05.268 discloses a similar assembly.

Because of the large forces tow hitches and the like have to be able to absorb and transfer they have to be built very strong. As a result the weight of the tow hitches and the like is large, which also applies to the detachable member. Managing the detachable member may therefore require a lot of effort. As a result it is difficult to properly orient the detachable member during coupling and to carry out the additional coupling actions, such as operating a knob. In general many people find the coupling hard to control, as a result of which they no longer wish to use the uncoupling function.

It is an object of the invention to improve on this.

From one aspect the invention to that end provides a coupling assembly according to claim 1.

In this manner the coupling can take place in two stages: a prepatory stage, wherein the coupling member to be placed is already placed and supported on the permanent coupling member, which can take place in an organised manner, and an end stage, wherein the inserted coupling member is further inserted and the actual coupling takes place. Between both stages the user may if necessary pause a little while and optionally carry out a check. For these coupling assemblies a bearing comprising pins and semi-circular edges is known per se. Special here is that the circular edges are continued for forming a support in the standby position.

Preferably the second and fourth coupling means form cooperating second and fourth support surfaces, wherein the second and/or fourth support surfaces comprise different surface parts for engagement in the standby position and engagement in the coupling position, respectively, wherein preferably the different surface parts are spaced apart in insertion direction, and wherein preferably the different surface parts connect to each other, preferably smoothly. The insertion motion is guided here.

Preferably the second and fourth coupling means are formed for together providing a slide bearing between the standby position and the coupling position, as a result of which the detachable coupling member is at all times supported and guided during the transition from the standby position to the coupling position.

The second or the fourth coupling means can be formed for together providing a rotation bearing between the standby position and the coupling position, so that the detachable coupling member is able to carry out a tilting motion.

The first and the third coupling means preferably are formed for mutual engagement in the coupling position and furthermore are formed for mutual supporting engagement in a standby position, wherein the coupling rod is still at a distance in insertion direction before the coupling position. The first and third coupling means therefore cooperate in the standby position.

The first and third coupling means can form cooperating first and third stop surfaces, wherein the first and the third stop surfaces face away from the insertion direction and face the insertion direction, respectively, preferably inclined, due to which a wedge action can be realised. The first and/or third stop surfaces can comprise different surface parts for engagement in the standby position and engagement in the coupling position. The different surface parts may be at an angle to each other.

In a further embodiment of the coupling assembly according to the invention the coupling head forms a first stop surface at a head surface, wherein the second coupling member is provided with a second stop surface spaced apart from the insertion end, which stop surface in the standby position is in engagement with the first stop surface.

In a particular embodiment thereof the first and the second stop surface are almost perpendicular to or incline backwards to the insertion direction, as a result of which when the coupling head is moved upwards when moving the detachable coupling member from the standby position to the coupling position the coupling rod is pressed in of its own accord, such in view of the release of the coupling rod.

The first coupling member can be provided with means for retaining the coupling rod in the inserted condition counter the pre-biassing in the bore, which retaining means can be deactivated by an inserting motion of the coupling rod, wherein the second stop surface is placed for pressing in the first stop surface and thus the coupling rod when moving the first coupling member from the standby position to the coupling position counter the pre-biassing.

At the lower side the coupling head can be provided with a first coupling surface and wherein the second stop surface changes into a second coupling surface, which in the coupling position cooperates with the first coupling surface.

From a further aspect the invention provides a method for placing a coupling assembly according to the invention, wherein the first coupling member is first placed in the standby position, and is subsequently brought in the coupling position by moving the connection member downward from the standby position while sliding the coupling end in the second coupling member and simultaneously moving the end of the coupling end upward.

Preferably the first coupling member is rotated in a vertical plane about the second coupling means when changing from the standby position to the coupling position, wherein the second coupling means also carry out a translational motion to the second coupling member.

From a further aspect the invention provides an assembly of a tow hitch member and a housing for partial accommodation of the tow hitch member in an accommodation direction, wherein the tow hitch member is provided with support pins situated transverse thereon for supporting the tow hitch member at support surfaces on the housing that are contiguous in the accommodation direction.

From a further aspect the invention provides a vehicle provided with a coupling assembly according to the invention.

The invention will be elucidated on the basis of an exemplary embodiment shown in the attached drawings, in which:
Figures 1A and 1B show a view in perspective of a coupling assembly according to the invention and a schematic, partially exploded cross-section of the insertion/accommodation end thereof, respectively, in a first stage of coupling.
Figures 2A and 2B show a view in perspective of a coupling assembly according to the invention and a schematic, partially exploded cross-section of the insertion/accommodation end thereof, respectively, during an interim stage thereof; and
Figures 3A and 3B show a view in perspective of a coupling assembly according to the invention and a schematic, partially exploded cross-section of the insertion/accommodation end thereof, respectively, when the coupling is realised.

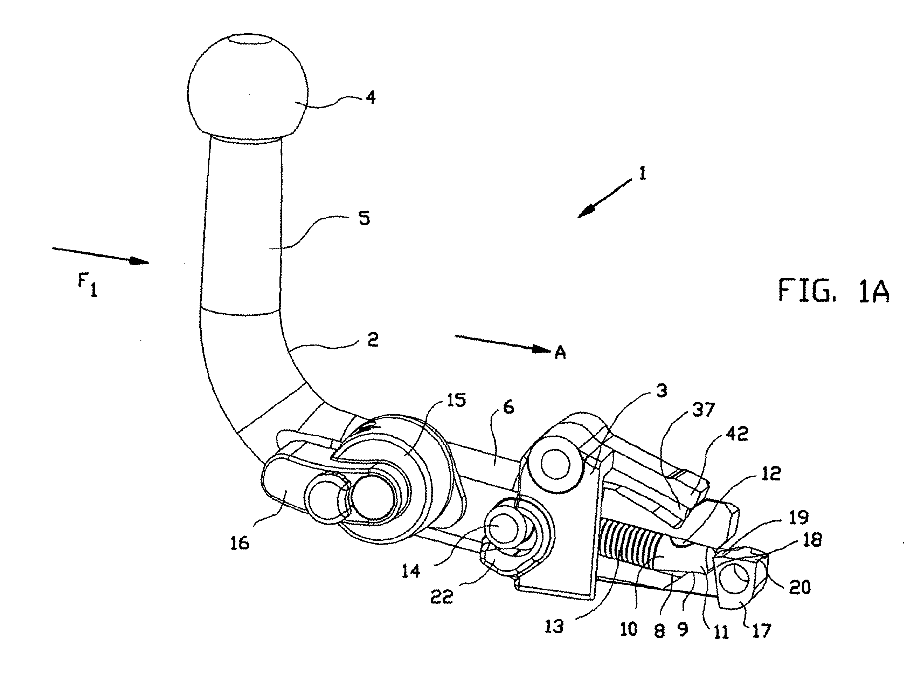

In figure 1A an exemplary embodiment of a coupling assembly 1 according to the invention is shown, comprising a tow hitch member 2 and an accommodation member 3. The tow hitch member 2 comprises a ball 4, a neck 5 and a tow hitch rod 6, which is intended to be accommodated in accommodation member 3.

The accommodation member 3 forms a tubular accommodation space, which is shown schematically and exploded, and forms an accommodation space for accommodation of the (exploded) insertion end 7 of the tow hitch rod 6.

The tow hitch member 2 is provided with a turning knob 15 with hand engagement part 16, for movement of a coupling rod 10, which is slidably accommodated in bore 8, in the insertion end 7. The coupling rod 10 is provided with a head 11, which extends from end opening 9 of the bore 8, and is pre-biassed in a direction A by means of a helical spring 13 placed in the bore 8 and around the coupling pin 10. At the lower side the coupling head 11 is provided with an inclined run-on surface 37, a securing surface 38 immediately contiguous and at an obtuse angle thereto, subsequently a surface 39 that is at 90° thereto, which inclines forward and upward with respect to the pin centre line S, then a contact or stop surface 40 at an obtuse angle thereto, which with respect to the centre line S inclines rearward and upward or runs back, and an upper surface 41 that abuts the inner wall of the bore 8. In the upper wall 41 a plastic insert 12 is accommodated, for engagement with the bore wall.

The insertion member 7 is furthermore provided with stop pins 14 extending sideward on both sides.

At the upper side, above the opening 9 of the bore 8, the insertion end 7 is provided with end surface 31, an inclined rearward extending surface 32 that is contiguous therewith in upward direction, a flat upper surface 33, and a surface 34 contiguous therewith and running inclined rearward and downward, which surface changes via a buckle into a surface 35 that inclines more steeply downward and rearward, which together with surface 36 that is almost perpendicular thereto forms a recess 51 in the upper side of insertion end 7.

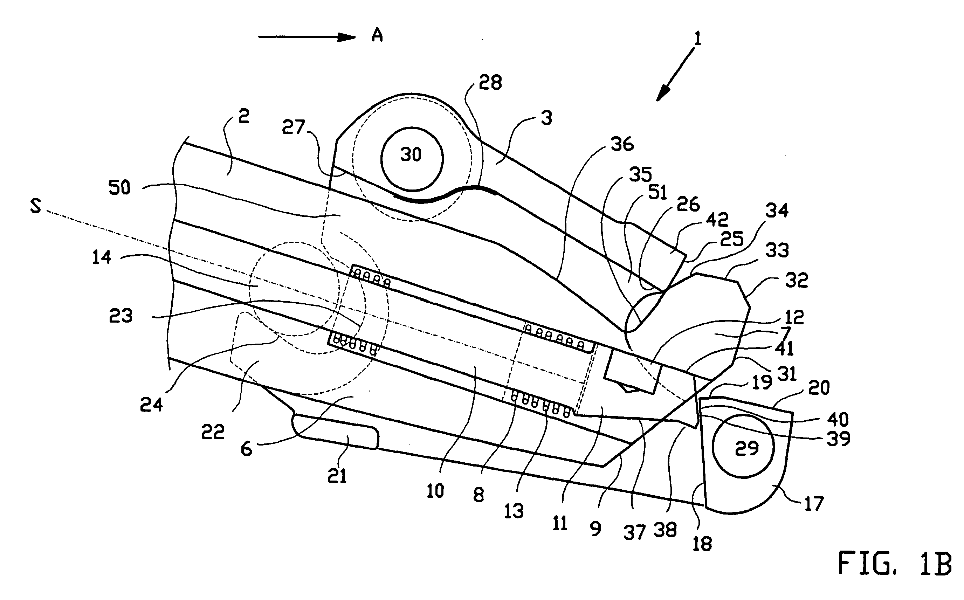

The accommodation member 3, more specifically shown in figure 1B, is substantially tubular, albeit with interruptions in the lower wall, for reasons of weight reduction. Thus a transverse member 21 is present at the lower side, which transverse member with upper wall 42 of accommodation member 3 defines an inlet opening 50 for the insertion end 7, and at the lower side of the accommodation member 3, spaced apart in (forward) insertion direction A, a transverse threshold 17 is provided, which is provided with a bore 29 for weight reduction. Near the inlet opening 50, the upper wall 42 is provided with a transversely continuous bore 30. At the lower side, starting with the inlet opening 50, the upper wall 42 is provided with an inclined guide surface 27, subsequently with a concave/convex surface 28, and subsequently with a straight inclined surface 26. The upper wall 42 ends in a stop surface 25 extending inclined upward/forward, that is more or less perpendicular to the surface 26.

Threshold 17 comprises a stop surface 18 that inclines backward and changes into a surface 19 via an almost right angle, which surface 19 changes into a surface 20 via a slight angle. The surfaces 18 and 40 are at least almost parallel in figures 1A,B.

Near the inlet opening 50 the accommodation member 3 is provided with bearing members 22, having a circular stop edge 23 and a straight support surface 24 connecting smoothly thereto. The straight support surface 24 is situated downwardly inclined in the insertion direction A.

Referring to the figures 1A, 1B, 2A, 2B, 3A and 3B the operation of the coupling assembly 1 shown therein will be elucidated.

In figures 1A and 1B the tow hitch member 2 with the insertion end 7 is inserted in accommodation member 3, in the direction F1. The user may do so by placing one hand under the knob 15 and placing the other hand on the tow hitch knob 4. The insertion end 7 of tow hitch member 2 is now inserted into the accommodation member 3 in the direction A to such an extent, that transverse pins 14 on both sides (only one side is shown), support on straight support surface 24 of bearing members 22.

In the situation shown in figures 1A and 1B, the stop surface 40 of the coupling head 11 has ended up against the rearward extending stop surface 18 of threshold 17. The insertion end 7 is now in the so-called standby position, wherein the slide rod 10 is retracted in the bore 8, with the head 11 for the largest part within the opening 9, but wherein the slide pin 10 is pre-biassed by compression spring 13 to a position extending out of the insertion end 7. This is prevented however by means of a trigger mechanism at the location of the knob 15 which mechanism is not further described but which is known per se. Said trigger mechanism operates such that when a force, exceeding a certain threshold value, is exerted on the coupling head 11, in a direction compressing the compression spring 13, the coupling rod 10, after having been pressed in over a distance, is released so that the compression spring 13 is able to push the coupling rod 10 including coupling head 11 to the outside.

At the upper wall of the insertion member 7 the surface 35 hooks just behind stop surface 25 of the upper wall 42 at the location of the buckle-shaped transition to surface 34. The tow hitch rod 6 is thus in engagement with the accommodation member 3 at three locations, that means at the location of pins 15 with support surface 24, of stop surface 40 with stop surface 18 and of surface 35 with stop surface 25. In that condition there is question of a more or less stable condition, a standby position, which if so desired can be lifted by further engagement of the tow hitch member 2 for completion of the coupling action. On the other hand the tow hitch member 2 can still be pulled back without the necessity of operating the knob 15. Due to the inclination of the straight support surface 24, a motion of the pins 24 over the support surface 24 in the insertion direction A and thus achieving the stable supporting condition is enhanced. In the stable condition the tow hitch member 2 can be released without it falling out of the accommodation member 3.

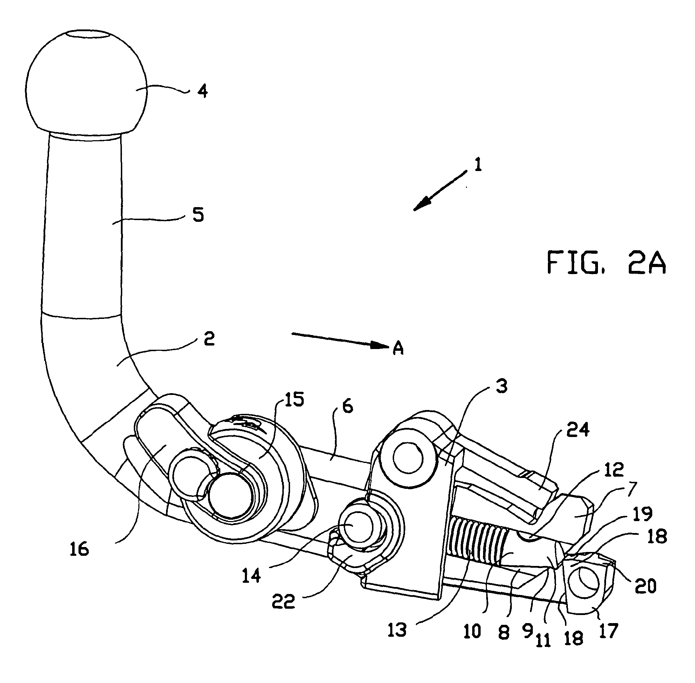

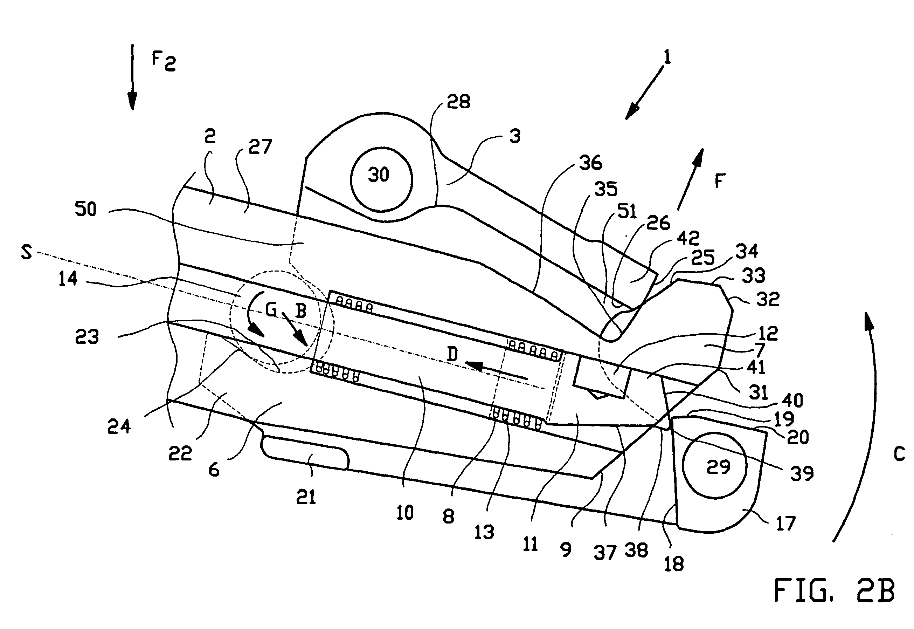

When the user wishes to effect the actual coupling, a downward force F2 can simply be exerted on the tow hitch knob 4, resulting in the stop pins 14, as shown in figure 2B, sliding over the support surface 24 in the direction B, towards the circular stop edge 23. Due to the vertical direction of the force F2 a tilting moment C will also be exerted on the tow hitch member 2. The stop surface 40 will slide upward in the direction E along the stop surface 18, wherein as a result of the rearward inclination thereof the coupling head 11 will be pressed in in the direction D counter the spring force of the compression spring 13. As a result of the tilting moment C the surface 35 will also move upward (F) which surface will then come to lie over a larger surface along the stop surface 25. Because of the inclined orientation of these surfaces with respect to the insertion direction A the insertion member 7 will be pulled reliably and as if of its own accord further into the accommodation space 3.

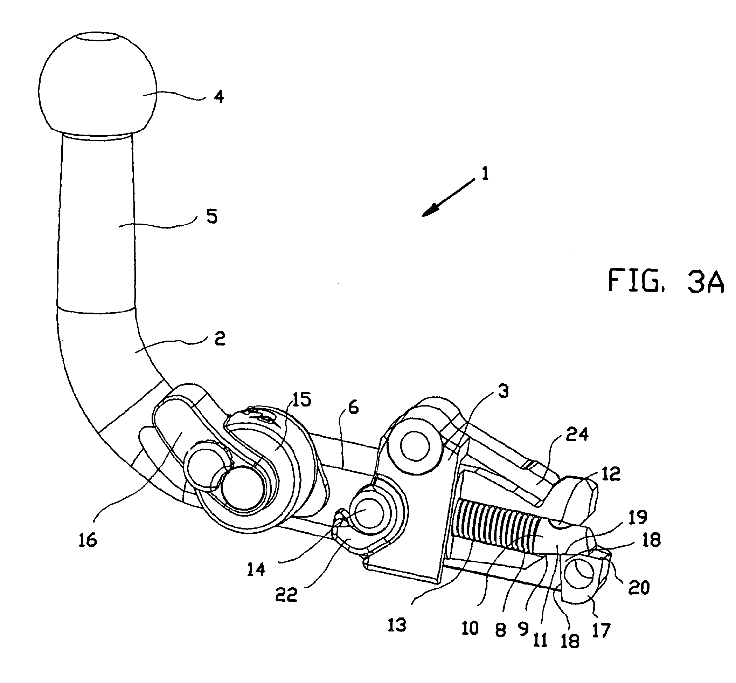

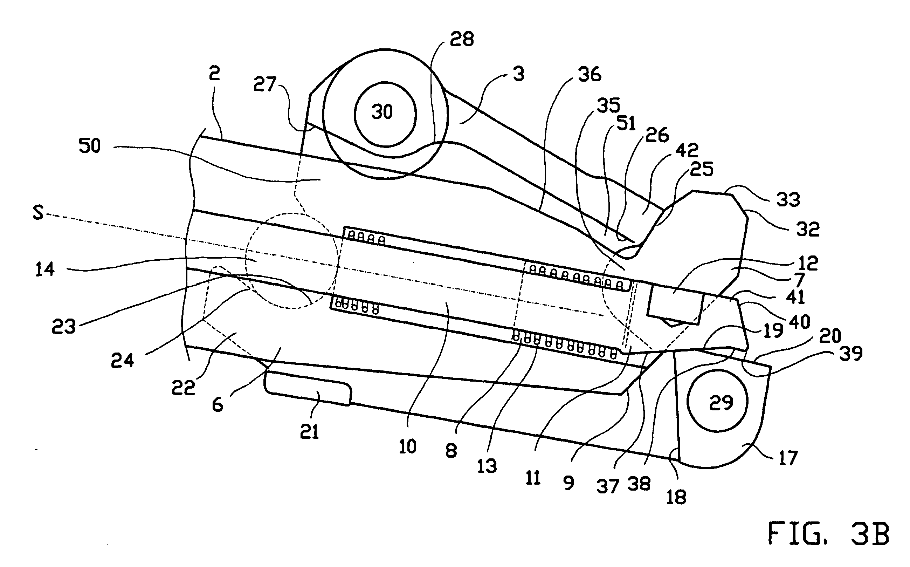

The trigger mechanism is adjusted such with respect to the motion of the coupling rod 10 that when the stop pins 14 abut the circular stop surface 23, as shown in figures 3A and 3B, the trigger mechanism will have been released, and the coupling head 11 with nose surface 39 has arrived at the location of coupling surface 19, so that the compression spring 13 extends the coupling rod 10 can exert influence. The nose surface 39 then slides further in the direction G over the surface 19, wherein the insertion member 7 is urged further upward in the direction F. Subsequently the surfaces 19 and 37 (which are then almost parallel) slide over each other, as a result of which the insertion member 7 is urged further upward in the direction F. The orientation of the said surfaces is such that the surfaces 25 and 35 as well slide past each other, and a tight, play-free fit has been achieved when the coupling pin 10 is fully extended. Then the situation shown in the figures 3A and 3B has been achieved, wherein the insertion end 7 of the tow hitch member 2 is reliably clamped in the accommodation member 3. In this position the cooperations between the stop pins 14 and circular bearing surface 23, the (wedge) surfaces 19 and 37, and the (wedge) surfaces 25 and 35 ensure a fixed clamping. Thus a kind of three-point support is achieved. The compression spring 13 here ensures forceful maintenance of this connection. The securing surface 38 now forms a downward stop surface that is almost parallel to the surface 20 and forms an additional securing means in case the coupling pin 10 inadvertently moves back.

For the wanted decoupling the operation knob 15 can be engaged and rotated in a manner known per se, in order to retract the coupling rod 10, so that the head 11 is retracted for the largest part into the opening 9 in the bore 8. The insertion member 7 can then be pulled out of the accommodation member 3 by using an upward force on the tow hitch knob 4, while pulling back the tow hitch member 2 in a direction opposite the direction A.

## Claims

1. Coupling assembly (1) for a vehicle, wherein the coupling assembly comprises a first coupling member (2) provided with a connection member (4) for/to a car trailer or an accessory, and a second coupling member (3) with which the first coupling member can be coupled in a detachable manner in a coupling position to connect it to the vehicle, wherein the first coupling member (2) comprises first and second coupling means (7: 14) and the second coupling member comprises third and fourth coupling means (42, 22) which in the coupling position cooperate with the first and second coupling means (7; 14), wherein the first coupling member comprises a rod-shaped coupling end (6) on which the first coupling means (7) are situated and which is provided with a longitudinal bore (8) and a coupling rod (10) that can be slid therein up to the coupling position, the coupling rod having a coupling head (11) extending out of the end of the longitudinal bore when in the extended position for keeping the said coupling means (7; 14) (42; 22) in coupling cooperation, which coupling rod is pre-biassed to the extended position, wherein the first and the second coupling means (7; 14) are spaced apart in the direction of the coupling end (6), wherein the first coupling means (7) are situated closer to the end of the coupling end, wherein the second coupling member (3) comprises a housing forming an accommodation space (51) for the coupling end and forming an insertion end (50) for it provided with the fourth coupling means (22), wherein the third coupling means (42) in insertion direction of the coupling end are spaced apart from the insertion end (50), wherein the second and the fourth coupling means (14; 22) are formed for mutual engagement in the coupling position and furthermore are formed for mutual, supporting engagement in a standby position, in which the coupling rod (10) is still at a distance in insertion direction before the coupling position, wherein the second coupling means (14) are formed by horizontally extending round pins (14) and the fourth coupling means (22) comprise curved bearing surfaces (23, 24) respectively, **characterized in that** the curved bearing surfaces (23, 24) define a centric rotation portion (23) that receives the round pins in the coupling position and change into a support surface (24) for the pins which diverges or runs off from the centric rotation portion (23).

2. Assembly (1) according to claim 1, wherein the second and fourth coupling means (14; 22) form cooperating second and fourth support surfaces, wherein the second and/or fourth support surfaces comprise different surface parts (23; 24) for engagement in the standby position and engagement in the coupling position, respectively, wherein preferably the different surface parts (23, 24) are spaced apart in insertion direction (A), and wherein preferably the different surface parts (23; 24) connect to each other, preferably smoothly.

3. Assembly (1) according to claim 2, wherein the diverging support surface (24) forms the different surface parts.

4. Assembly (1) according to claim 1, wherein the second and fourth coupling means (14, 22) are formed for together providing a slide bearing and rotation bearing between the standby position and the coupling position.

5. Assembly (1) according to any one of the preceding claims, wherein the first and the third coupling means (7; 42) are formed for mutual engagement in the coupling position and furthermore are formed for mutual supporting engagement in a standby position, wherein the coupling rod (10) is still at a distance in insertion direction before the coupling position, wherein preferably the first and third coupling means (7; 42) form cooperating first and third stop surfaces (35; 25), wherein the first and the third stop surfaces face away from the insertion direction and face the insertion direction, respectively, preferably inclined.

6. Assembly (1) according to claim 5, wherein the first and/or third stop surfaces (35; 25) comprise different surface parts (34, 35) for engagement in the standby position and engagement in the coupling position, wherein preferably the different surface parts (34, 35) are at an angle to each other.

7. Assembly (1) according to any one of the preceding claims, wherein the coupling head (11) forms a first stop surface (39) at a head surface, wherein the second coupling member (3) is provided with a second stop surface (18) spaced apart from the insertion end (50), which stop surface (18) in the standby position is in engagement with the first stop surface (39), wherein preferably the first and the second stop surface (39; 18) are almost perpendicular to or incline backwards to the insertion direction (A), and wherein preferably the first coupling member (2) is provided with means for retaining the coupling rod (10) in the inserted condition counter the pre-biassing in the bore, which retaining means can be deactivated by an inserting motion of the coupling rod (10), wherein the second stop surface (18) is placed for pressing in the first stop surface (34) and thus the coupling rod (10) when moving the first coupling member (2) from the standby position to the coupling position counter the pre-biassing.

8. Assembly (1) according to claim 7, wherein at the lower side the coupling head (11) is provided with a first coupling surface (37) and wherein the second stop surface (18) changes into a second coupling surface (19), which in the coupling position cooperates with the first coupling surface.

9. Method for placing a coupling assembly (1) according to any one of the preceding claims, wherein the first coupling member (2) is first placed in the standby position, and is subsequently brought in the coupling position by moving the connection member (4) downward from the standby position while sliding the coupling end (6) in the second coupling member (3) and simultaneously moving the end of the coupling end (6) upward, and wherein preferably the first coupling member (2) is rotated in a vertical plane about the second coupling means (14) when changing from the standby position to the coupling position, wherein the second coupling means (14) also carry out a translational motion to the second coupling member.

10. Vehicle provided with a coupling assembly according to any one of the claims 1- 8.

## Patentansprüche

1. Kupplungseinheit (1) für ein Fahrzeug, wobei die Kupplungseinheit ein erstes Kupplungsglied (2), welches mit einem Verbindungsglied (4) für/zu einen/einem Autoanhänger oder ein/einem Zubehör versehen ist, und ein zweites Kupplungsglied (3), mit welchem das erste Kupplungsglied in einer Kupplungsstellung zur Verbindung mit dem Fahrzeug in abnehmbarer Weise koppelbar ist, aufweist, wobei das erste Kupplungsglied (2) erste und zweite Kupplungsmittel (7; 14) umfasst und das zweite Kupplungsglied dritte und vierte Kupplungsmittel (42; 22), welche in der Kupplungsstellung mit den ersten und zweiten Kupplungsmitteln (7; 14) zusammenwirken, umfasst, wobei das erste Kupplungsglied ein stabartiges Kupplungsende (6) aufweist, auf welchem das erste Kupplungsmittel (7) angeordnet ist und welches mit einer Längsbohrung (8) und einer Kupplungsstange (10), die darin bis zu der Kupplungsstellung einschiebbar ist, versehen ist, wobei die Kupplungsstange einen Kupplungskopf (11) aufweist, welcher sich in der ausgefahrenen Stellung zum Halten der Kupplungsmittel (7; 14) (42; 22) in kuppelnder Zusammenwirkung aus dem Ende der Längsbohrung hervor erstreckt, wobei die Kupplungsstange in die ausgefahrene Stellung vorgespannt ist, wobei die ersten und zweiten Kupplungsmittel (7; 14) mit Zwischenraum voneinander in der Richtung des Kupplungsendes (6) angeordnet sind, wobei das erste Kupplungsmittel (7) näher an dem Ende des Kupplungsendes angeordnet ist, wobei das zweite Kupplungsglied (3) ein Gehäuse aufweist, welches einen Aufnahmeraum (51) für das Kupplungsende bildet und ein Einsetzende (50) dafür bildet, das mit dem vierten Kupplungsmittel (22) versehen ist, wobei das dritte Kupplungsmittel (42) in Einsetzrichtung des Kupplungsendes mit Zwischenraum von dem Einsetzende (50) angeordnet ist, wobei das zweite und das vierte Kupplungsmittel (14; 22) zum wechselseitigen Eingriff in der Kupplungsstellung ausgebildet sind, und weiterhin für einen wechselseitigen, tragenden Eingriff in einer Bereitschaftsstellung, in welcher die Kupplungsstange (10) in Einsetzrichtung noch in einem Abstand vor der Kupplungsstellung steht, ausgebildet sind, wobei das zweite Kupplungsmittel (14) durch sich horizontal erstreckende gerundete Stifte (14) gebildet ist und das vierte Kupplungsmittel (22) jeweils gekrümmte Lagerflächen (23, 24) aufweist, **dadurch gekennzeichnet, dass** die gekrümmten Lagerflächen (23, 24) einen zentrischen Rotationsabschnitt (23) festlegen, welcher die gerundeten Stifte in der Kupplungsstellung aufnimmt und sich in eine Lagerfläche (24) für die Stifte ändert, die von dem zentrischen Rotationsabschnitt (23) abweicht oder aus diesem herausläuft.

2. Kupplungseinheit (1) nach Anspruch 1, wobei das zweite und vierte Kupplungsmittel (14; 22) zweite und vierte tragende Flächen bilden, wobei die zweite und/oder vierte tragende Fläche jeweils unterschiedliche Flächenteile (23; 24) zum Eingriff in der Bereitschaftsstellung und zum Eingriff in der Kupplungsstellung aufweist/aufweisen, wobei vorzugsweise die unterschiedlichen Flächenteile (23; 24) in Einsetzrichtung (A) mit Zwischenraum voneinander angeordnet sind, und wobei vorzugsweise die unterschiedlichen Flächenteile (23; 24) miteinander, vorzugsweise ineinander fließend, verbunden sind.

3. Kupplungseinheit (1) nach Anspruch 2, wobei die abweichende tragende Fläche (24) die unterschiedlichen Flächenteile bildet.

4. Kupplungseinheit (1) nach Anspruch 1, wobei das zweite und vierte Kupplungsmittel (14, 22) derart ausgebildet sind, dass sie zusammen ein Gleitlager und ein Drehlager zwischen der Bereitschaftsstellung und der Kupplungsstellung bilden.

5. Kupplungseinheit (1) nach einem der vorhergehenden Ansprüche, wobei das erste und das dritte Kupplungsmittel (7; 42) für wechselseitigen Eingriff in der Kupplungsstellung ausgebildet sind, und weiterhin für wechselseitigen, tragenden Eingriff in einer Bereitschaftsstellung ausgebildet sind, wobei die Kupplungsstange (10) in Einsetzrichtung noch in einem Abstand vor der Kupplungsstellung steht, wobei vorzugsweise das erste und dritte Kupplungsmittel (7; 42) zusammenwirkende erste und zweite Anschlagflächen (35; 25) bilden, wobei die erste und zweite Anschlagfläche von der Einsetzrichtung weg weisen und zu der Einsetzrichtung, vorzugsweise geneigt, weisen.

6. Kupplungseinheit (1) nach Anspruch 5, wobei die erste und/oder die dritte Anschlagfläche (35; 25) unterschiedliche Flächenteile (34, 35) zum Eingriff in der Bereitschaftsstellung und zum Eingriff in der Kupplungsstellung umfassen, wobei vorzugsweise die unterschiedliche Flächenteile (34, 35) winklig zueinander liegen.

7. Kupplungseinheit (1) nach einem der vorhergehenden Ansprüche, wobei der Kupplungskopf (11) eine erste Anschlagfläche (39) an einer Kopffläche bildet, wobei das zweite Kupplungsglied (3) mit einer zweiten Anschlagfläche (18) versehen ist, welche mit einem Zwischenraum von dem Einsetzende (50) angeordnet ist, wobei die Anschlagfläche (18) in der Bereitschaftsstellung in Eingriff mit der ersten Anschlagfläche (39) steht, wobei vorzugsweise die erste und die zweite Anschlagfläche (39; 18) fast senkrecht zu oder rückwärts geneigt zu der Einsetzrichtung (A) liegen, und wobei vorzugsweise das erste Kupplungsglied (2) mit Rückhaltemitteln für die Kupplungsstange (10) in der eingesetzten Lage gegen die Vorspannung in der Bohrung versehen ist, wobei die Rückhaltemittel durch einen Einsetzbewegung der Kupplungsstange (10) deaktivierbar sind, wobei die zweite Anschlagfläche (18) zum Eindrücken der ersten Anschlagfläche (34) und auf diese Weise die Kupplungsstange (10) beim Verstellen des ersten Kupplungsgliedes (2) aus der Bereitschaftsstellung in die Kupplungsstellung gegen die Vorspannung angeordnet ist.

8. Kupplungseinheit (1) nach Anspruch 7, wobei der Kupplungskopf (11) an der unteren Seite mit einer ersten Kupplungsfläche (37) versehen ist, und wobei die zweite Anschlagfläche (18) in eine zweite Kupplungsfläche (19) übergeht, welche in der Kupplungsstellung mit der ersten Kupplungsfläche zusammenwirkt.

9. Verfahren zum Anbringen einer Kupplungseinheit (1) nach einem der vorhergehenden Ansprüche, wobei das erste Kupplungsglied (2) zuerst in der Bereitschaftsstellung angeordnet wird und anschließend durch Verstellen des Verbindungsgliedes (4) nach unten aus der Bereitschaftsstellung in die Kupplungsstellung gebracht wird, während das Kupplungsende (6) in das zweite Kupplungsglied (3) eingeschoben wird und gleichzeitig das Ende des Kupplungsendes (6) nach oben verstellt wird, und wobei beim Wechseln von der Bereitschaftsstellung in die Kupplungsstellung vorzugsweise das erste Kupplungsglied (2) in einer vertikalen Ebene um das zweite Kupplungsmittel (14) gedreht wird, wobei das zweite Kupplungsmittel (14) auch eine Translationsbewegung auf das zweite Kupplungsglied zu durchführt.

10. Fahrzeug ausgerüstet mit einer Kupplungseinheit nach einem der Ansprüche1 - 8.

## Revendications

1. Ensemble d'attelage (1) pour un véhicule, dans lequel l'ensemble d'attelage comprend un premier élément d'attelage (2) prévu avec un élément de raccordement (4) pour/à une remorque de voiture ou un accessoire, et un deuxième élément d'attelage (3) avec lequel le premier élément d'attelage peut être couplé, d'une manière détachable, dans une position d'attelage, pour le raccorder au véhicule, dans lequel le premier élément d'attelage (2) comprend des premier et deuxième moyens d'attelage (7 ; 14) et le deuxième élément d'attelage comprend des troisième et quatrième moyens d'attelage (42, 22) qui, dans la position d'attelage, coopèrent avec les premier et deuxième moyens d'attelage (7 ; 14), dans lequel le premier élément d'attelage comprend une extrémité d'attelage en forme de tige (6) sur laquelle les premiers moyens d'attelage (7) sont positionnés et qui est prévu avec un alésage longitudinal (8) et une tige d'attelage (10) qui peut coulisser à l'intérieur de ce dernier jusqu'à la position d'attelage, la tige d'attelage ayant une tête d'attelage (11) s'étendant à l'extérieur de l'extrémité de l'alésage longitudinal lorsqu'il est dans la position étendue pour maintenir lesdits moyens d'attelage (7 ; 14) (42 ; 22) en coopération d'attelage, laquelle tige d'attelage est sollicitée au préalable dans la position étendue, dans lequel les premier et deuxième moyens d'attelage (7 ; 14) sont écartés dans la direction de l'extrémité d'attelage (6), dans lequel les premiers moyens d'attelage (7) sont positionnés plus à proximité de l'extrémité de l'extrémité d'attelage, dans lequel le deuxième élément d'attelage (3) comprend un boîtier formant un espace de réception (51) pour l'extrémité d'attelage et formant une extrémité d'insertion (50) pour cette dernière, prévu avec les quatrièmes moyens d'attelage (22), dans lequel les troisièmes moyens d'attelage (42) dans la direction d'insertion de l'extrémité d'attelage sont éloignés de l'extrémité d'insertion (50), dans lequel les deuxième et quatrième moyens d'attelage (14 ; 22) sont formés pour la mise en prise mutuelle dans la position d'attelage et sont formés en outre pour la mise en prise de support mutuel dans une position d'attente, dans laquelle la tige d'attelage (10) est encore à une certaine distance dans la direction d'insertion avant la position d'attelage, dans lequel les deuxièmes moyens d'attelage (14) sont formés par des broches rondes (14) s'étendant de manière horizontale et les quatrièmes moyens d'attelage (22) comprennent des surfaces de palier incurvées (23, 24) respectivement, **caractérisé en ce que** les surfaces de palier incurvées (23, 24) définissent une partie de rotation centrale (23) qui reçoit les broches rondes dans la position d'attelage et se transforment en une surface de support (24) pour les broches qui divergent ou s'éloignent de la position de rotation centrale (23).

2. Ensemble (1) selon la revendication 1, dans lequel les deuxième et quatrième moyens d'attelage (14 ; 22) forment des deuxième et quatrième surfaces de support coopérantes, dans lequel les deuxième et/ou quatrième surfaces de support comprennent différentes parties de surface (23 ; 24) pour la mise en prise dans la position d'attente et la mise en prise dans la position d'attelage, respectivement, dans lequel de préférence les différentes parties de surface (23, 24) sont écartées dans la direction d'insertion (A), et dans lequel de préférence les différentes parties de surface (23 ; 24) se raccordent entre elles, de préférence sans à-coups.

3. Ensemble (1) selon la revendication 2, dans lequel la surface de support divergente (24) forme les différentes parties de surface.

4. Ensemble (1) selon la revendication 1, dans lequel les deuxième et quatrième moyens d'attelage (14, 22) sont formés pour fournir ensemble un palier coulissant et un palier de rotation entre la position d'attente et la position d'attelage.

5. Ensemble (1) selon l'une quelconque des revendications précédentes, dans lequel les premier et troisième moyens d'attelage (7 ; 42) sont formés pour la mise en prise mutuelle dans la position d'attelage et sont en outre formés pour la mise en prise de support mutuel dans une position d'attente, dans lequel la tige d'attelage (10) est encore à une certaine distance dans la direction d'insertion avant la position d'attelage, dans lequel, de préférence les premier et troisième moyens d'attelage (7 ; 42) forment des première et troisième surfaces de butée coopérantes (35 ; 25), dans lequel les première et troisième surfaces de butée sont orientées à distance de la direction d'insertion et font face à la direction d'insertion respectivement, de préférence inclinées.

6. Ensemble (1) selon la revendication 5, dans lequel les première et/ou troisième surfaces de butée (35 ; 25) comprennent différentes parties de surface (34, 35) pour la mise en prise dans la position d'attente et la mise en prise dans la position d'attelage, dans lequel de préférence les différentes parties de surface (34, 35) sont positionnées selon un angle les unes par rapport aux autres.

7. Ensemble (1) selon l'une quelconque des revendications précédentes, dans lequel la tête d'attelage (11) forme une première surface de butée (39) au niveau d'une surface de tête, dans lequel le deuxième élément d'attelage (3) est prévu avec la deuxième surface de butée (18) éloignée de l'extrémité d'insertion (50), laquelle surface de butée (18) dans la position d'attente est en mise en prise avec la première surface de butée (39), dans lequel de préférence les première et deuxième surfaces de butée (39 ; 18) sont presque perpendiculaires à ou s'inclinent vers l'arrière par rapport à la direction d'insertion (A), et dans lequel de préférence le premier élément d'attelage (2) est prévu avec des moyens pour retenir la tige d'attelage (10) dans la condition insérée contre la sollicitation préalable dans l'alésage, lesquels moyens de retenue peuvent être désactivés par un mouvement d'insertion de la tige d'attelage (10), dans lequel la deuxième surface de butée (18) est placée pour la compression dans la première surface de butée (34) et ainsi la tige d'attelage (10), lorsque l'on déplace le premier élément d'attelage (2) de la position d'attente à la position d'attelage contre la sollicitation préalable.

8. Ensemble (1) selon la revendication 7, dans lequel, au niveau du côté inférieur, la tête d'attelage (11) est prévue avec une première surface d'attelage (37) et dans lequel la deuxième surface de butée (18) se transforme en une deuxième surface d'attelage (19), qui, dans la position d'attelage, coopère avec la première surface d'attelage.

9. Procédé pour placer un ensemble d'attelage (1) selon l'une quelconque des revendications précédentes, dans lequel le premier élément d'attelage (2) est placé tout d'abord dans la position d'attente, et est ensuite amené dans la position d'attelage en déplaçant l'élément de raccordement (4) vers le bas à partir de la position d'attente tout en faisant coulisser l'extrémité d'attelage (6) dans le deuxième élément d'attelage (3) et en déplaçant simultanément l'extrémité de l'extrémité d'attelage (6) vers le haut, et dans lequel de préférence le premier élément d'attelage (2) est entraîné en rotation dans un plan vertical autour des deuxièmes moyens d'attelage (14) tout en passant de la position d'attente à la position d'attelage, dans lequel les deuxièmes moyens d'attelage (14) réalisent également un mouvement de translation par rapport au deuxième élément d'attelage.

10. Véhicule doté d'un ensemble d'attelage selon l'une quelconque des revendications 1 à 8.
